# EUROPÄISCHE PATENTSCHRIFT

(11) **EP 3 250 420 B1**
(45) Veröffentlichungstag und Bekanntmachung des Hinweises auf die Patenterteilung: **13.03.2019**
(21) Anmeldenummer: 16703071.7
(22) Anmeldetag: 21.01.2016
(51) Int. Cl.: B60R 21/36

(54) **GASSACKANORDNUNG FÜR EIN KRAFTFAHRZEUG**
AIRBAG ARRANGEMENT FOR A MOTOR VEHICLE
DISPOSITIF DE COUSSIN GONFLABLE POUR VEHICULE AUTOMOBILE

(30) Priorität: 30.01.2015 DE 102015101394; 13.10.2015 DE 102015219856
(43) Veröffentlichungstag der Anmeldung: 06.12.2017
(73) Patentinhaber: Joyson Safety Systems Germany GmbH, 63743 Aschaffenburg (DE)
(72) Erfinder: STEINKE, Norman, 10785 Berlin (DE); PORSTMANN, Marco, 16548 Glienicke/Nordbahn (DE); KALLISKE, Ingo, 14476 Potsdam (DE); CLAUSS, Yves, 14482 Potsdam (DE)
(74) Vertreter: Maikowski & Ninnemann Patentanwälte Partnerschaft mbB
(86) Internationale Anmeldenummer: PCT/EP2016/051232
(87) Internationale Veröffentlichungsnummer: WO 2016/120148

(56) Entgegenhaltungen:
- DE-A1-102009 023 779
- DE-A1-102009 040 641
- DE-A1-102011 085 330
- DE-U1-202011 052 110
- US-A1- 2014 332 302

## Beschreibung

Die Erfindung betrifft eine Gassackanordnung für ein Kraftfahrzeug gemäß dem Oberbegriff des Anspruchs 1 sowie ein Kraftfahrzeug mit einer solchen Gassackanordnung gemäß Anspruch 12.

Eine Gassackanordnung für ein Kraftfahrzeug dient dem Schutz von Personen innerhalb oder außerhalb des Kraftfahrzeugs in einer Unfallsituation. Die Gassackanordnung umfasst einen Gassack, der im Auslösefall mittels eines Gasgenerators mit einem Gas befüllt wird, um sich zum Schutz der sich innerhalb oder außerhalb des Kraftfahrzeugs befindlichen Person zu entfalten. Der Gassack ist regelmäßig in einem Gehäuse angeordnet.

Eine solche Gassackanordnung kann beispielsweise zum Schutz des Fahrers oder Beifahrers im Innenraum des Kraftfahrzeugs zwischen dem (Bei)Fahrersitz und der Windschutzscheibe angeordnet sein und sich im Auslösefall zwischen dem (Bei)Fahrersitz und der Windschutzscheibe entfalten. Zum Schutz einer sich außerhalb des Kraftfahrzeugs befindlichen Person, beispielsweise eines am Unfall beteiligten Fußgängers oder Radfahrers, kann die Gassackanordnung unterhalb einer Motorhaube des Kraftfahrzeugs angeordnet und mit dieser verbunden sein, und der Gassack kann sich im Auslösefall entlang der Fahrzeugfront, insbesondere in Richtung auf die Windschutzscheibe, entfalten. Zur Schaffung des für eine Entfaltung des Gassackes in Richtung auf die Windschutzscheibe erforderlichen Raums kann die Motorhaube im Bereich der Windschutzscheibe angehoben und das Gehäuse der Gassackanordnung partiell geöffnet beziehungsweise partiell von der Motorhaube gelöst werden. Damit sich das Gehäuse öffnen beziehungsweise lösen kann, kann eine durch den sich entfaltenden Gassack lösbare Verbindung vorgesehen sein, die das Gehäuse im Ruhezustand zusammenhält beziehungsweise an der Motorhaube befestigt.

Um den Belastungen im normalen Betrieb (z.B. Vibrationen im Fahrbetrieb, beim Öffnen und Schließen der Motorhaube für Wartungsarbeiten) standzuhalten, sollte eine solch lösbare Verbindung entsprechend widerstandsfähig ausgeführt sein, so dass sicher gestellt werden kann, dass sich die Verbindung tatsächlich nur durch den sich entfaltenden Gassack löst und nicht bereits durch übliche Erschütterungen des Fahrzeugs. Das führt wiederum dazu, dass die durch den sich entfaltenden Gassack aufzubringenden Kräfte für das Lösen der Verbindung entsprechend hoch sein müssen. Um die Kräfte des sich entfaltenden Gassackes gezielt auf die zu lösende Verbindung zu übertragen, sollte beispielsweise das Gehäuse ausreichend starr / steif ausgebildet sein. Die erforderliche Steifigkeit kann beispielsweise durch eine hohe Wandstärke und / oder Versteifungsrippen erreicht werden. Derartige Maßnahmen zur Erhöhung der Steifigkeit erhöhen jedoch das Gesamtgewicht der Gassackanordnung und können Schwingungsprobleme im Fahrbetrieb bedingen.
Die DE 10 2011 085 330 A1 und die DE 20 2011 052 110 U1 beschreiben eine Gassackanordnung für ein Kraftfahrzeug, mit einem Gassack, der zum Schutz einer sich außerhalb des Fahrzeugs befindlichen Person entlang zumindest eines Teilabschnitts der Frontscheibe und/oder eines sonstigen Abschnitts einer Außenseite des Kraftfahrzeugs entfaltbar ist, und einem Gehäuse, in dem der Gassack angeordnet ist. Das Gehäuse ist von einer sich vor der Frontscheibe erstreckenden Abdeckung eines Aufnahmebereichs des Kraftfahrzeugs verschieden und so ausgestaltet, dass es den Gassack - bezogen auf den im Fahrzeug montierten Zustand der Gassackanordnung - zumindest teilweise zu der Abdeckung des Kraftfahrzeugs hin abdeckt.

Aus der DE 10 2009 023779 A1 welche den Oberbegriff des Anspruchs 1 offenbart, ist eine Gassackanordnung mit einem schalenförmigen Gehäuse bekannt, das lösbar an einer Motorhaube befestigt ist. Die durch den sich entfaltenden Gassack lösbare Verbindung wird durch ein Befestigungsmittel in Form eines Clips bereitgestellt, der mit einer Sollbruchstelle versehen ist. Im Auslösefall zerbricht das Befestigungsmittel entlang der Sollbruchstelle, so dass die Verbindung zur Motorhaube gelöst wird und der Gassack sich entfalten kann. Die Zerstörung des Befestigungsmittels im Auslösefall führt jedoch auch dazu, dass lose Teile des Befestigungsmittels umherfliegen, die die Sicherheit der beteiligten Personen gefährden könnten.
Es besteht daher ein Bedarf an einer Gassackanordnung, die ein sicheres Entfalten des Gassacks ermöglicht. Der Erfindung liegt die Aufgabe zugrunde, eine Gassackanordnung bereitzustellen, welche die genannten Nachteile überwindet.
Diese Aufgabe wird durch eine Gassackanordnung mit den Merkmalen des Anspruchs 1 gelöst. Ausgestaltungen der Erfindung sind in den Unteransprüchen angegeben.
Danach umfasst die Gassackanordnung für ein Kraftfahrzeug einen Gassack, der zum Schutz einer sich außerhalb oder innerhalb des Kraftfahrzeugs befindlichen Person entfaltbar ist, und ein Gehäuse, in dem der Gassack vor dem Entfalten angeordnet ist. Das Gehäuse umfasst ein erstes Gehäuseteil, das mittels mindestens eines ersten Befestigungsmittels mit einem zweiten Gehäuseteil und / oder mit einer Fahrzeugkomponente verbindbar ist. Das Gehäuse kann also zwei Gehäuseteile umfassen, die mittels des mindestens einen ersten Befestigungsmittels miteinander verbunden sind. Das erste Gehäuseteil und das zweite Gehäuseteil können als zwei separate Bauteile ausgebildet sein, die erst durch das mindestens eine erste Befestigungsmittel miteinander verbunden werden. Alternativ können das erste Gehäuseteil und das zweite Gehäuseteil einstückig ausgebildet und abschnittsweise miteinander verbunden sein. Auch kann eine Fahrzeugkomponente ein Gehäuseteil bilden, an das das erste Gehäuseteil dann mittels des mindestens einen ersten Befestigungsmittels befestigt wird. Vorzugsweise ist eine Vielzahl von ersten Befestigungsmitteln vorgesehen. Die Fahrzeugkomponente kann beispielsweise eine Motorhaube sein. Diese Variante ist insbesondere für Gassackanordnungen geeignet, die zum Schutz einer sich außerhalb des Kraftfahrzeugs befindlichen Person vorgesehen sind.

Das mindestens eine erste Befestigungsmittel ist in einem Befestigungsbereich des ersten Gehäuseteils und einem Befestigungsbereich des zweiten Gehäuseteils angeordnet. Dabei kann für den Fall, dass eine Vielzahl von ersten Befestigungsmitteln vorgesehen ist, jedem ersten Befestigungsmittel ein Befestigungsbereich des ersten Gehäuseteils und ein Befestigungsbereich des zweiten Gehäuseteils zugeordnet werden. Vorzugsweise erstreckt sich die daraus ergebende Vielzahl von Befestigungsbereichen jeweils entlang eines Abschnitts der Umfangskanten des ersten Gehäuseteils und des zweiten Gehäuseteils beziehungsweise entlang der gesamten Umfangskanten. Die Umfangskanten können als Flansche ausgebildet sein.

Die erfindungsgemäße Gassackanordnung zeichnet sich dadurch aus, dass der Befestigungsbereich des ersten Gehäuseteils über eine Sollbruchstelle mit einem Teilabschnitt des ersten Gehäuseteils verbunden ist, wobei sich die Sollbruchstelle im bestimmungsgemäß angeordneten Zustand des mindestens einen ersten Befestigungsmittels zumindest abschnittsweise um das mindestens eine erste Befestigungsmittel erstreckt und die Sollbruchstelle durch den sich entfaltenden Gassack aufreißbar ist. Der Teilabschnitt kann dabei derjenige Restbereich des ersten Gehäuseteils sein, der außerhalb des Befestigungsbereichs des ersten Gehäuseteils liegt. Beim Aufreißen der Sollbruchstelle trennt sich der Teilabschnitt des ersten Gehäuseteils teilweise von dem zweiten Gehäuseteil beziehungsweise der Fahrzeugkomponente. Dabei bleibt der Befestigungsbereich des ersten Gehäuseteils weiterhin über das mindestens eine erste Befestigungsmittel mit dem zweiten Gehäuseteil beziehungsweise der Fahrzeugkomponente verbunden.

Beim Auslösen des Gasgenerators trennt sich also der Teilabschnitt des ersten Gehäuseteils von dem Befestigungsbereich des ersten Gehäuseteils mit dem er zuvor über die Sollbruchstelle verbunden war. Dieser Befestigungsbereich des ersten Gehäuseteils bleibt dabei mittels des mindestens einen ersten Befestigungsmittels fest mit dem zweiten Gehäuseteil beziehungsweise der Fahrzeugkomponente verbunden. Der Teilabschnitt des ersten Gehäuseteils bleibt jedoch mittels mindestens eines weiteren ersten Befestigungsmittels oder anderweitig mit dem zweiten Gehäuseteil beziehungsweise der Fahrzeugkomponente verbunden. Hierdurch wird vermieden, dass beim Auslösen des Gasgenerators das Gehäuse in Teile zertrennt wird, die durch den sich ausdehnenden Gassack beschleunigt werden und umherfliegen können. Das Auslösen des Gasgenerators führt lediglich zu einem Aufreißen des Gehäuses, nicht zu einem Segmentieren in mehrere Teile.

Gemäß einer Ausführungsform kann beispielsweise vorgesehen sein, dass ein erstes und ein zweites Gehäuseteil als separate Bauteile bereitgestellt werden, die entlang ihrer Umfangskanten jeweils eine Vielzahl von Befestigungsbereichen aufweisen, die zur Verbindung der beiden Gehäuseteile zunächst zur Deckung gebracht werden. In jedem Befestigungsbereichspaar kann jeweils ein erstes Befestigungsmittel angeordnet sein, um das erste und das zweite Gehäuseteil entlang der gesamten Umfangskante zusammenzuhalten. Dabei kann eine Reihe von aufeinander folgenden Befestigungsbereichen des ersten Gehäuseteils jeweils mittels einer Sollbruchstelle mit dem Teilabschnitt des ersten Gehäuseteils verbunden sein.

Die Sollbruchstelle kann insbesondere durch eine Schwächung der Materialstärke des ersten Gehäuseteils gebildet werden. Dabei kann die Sollbruchstelle insbesondere in unmittelbarer Nähe zu dem mindestens einen ersten Befestigungsmittel vorgesehen sein, wenn das mindestens eine erste Befestigungsmittel bestimmungsgemäß in dem Befestigungsbereich angeordnet ist. Hierdurch wird die Größe der Sollbruchstelle und damit die Schwächung des ersten Gehäuseteils möglichst gering gehalten, so dass ein Aufbrechen der Sollbruchstelle nicht bereits durch übliche Erschütterungen des Fahrzeugs im Fahrbetrieb eintritt. Umfasst das mindestens eine erste Befestigungsmittel beispielsweise eine Schraube und eine Unterlegscheibe, so kann der Befestigungsbereich beispielsweise nur wenig größer als die Unterlegscheibe ausgebildet sein, so dass sich die Sollbruchstelle dicht entlang der Kante der Unterlegscheibe erstreckt.

In einer Ausführungsform kann die Sollbruchstelle das mindestens eine erste Befestigungsmittel (im bestimmungsgemäß angeordneten Zustand) als geschlossene Kontur umgeben. So kann die Sollbruchstelle beispielsweise kreisförmig mit einem Durchmesser ausgebildet sein, der nur etwas größer als der Durchmesser des ersten Befestigungsmittels ist. Durch die geschlossene Kontur kann sich beim Aufreißen der Sollbruchstelle der Befestigungsbereich des ersten Gehäuseteils von dem Teilabschnitt des ersten Gehäuseteils trennen. Anstelle einer geschlossenen Kontur kann die Sollbruchstelle durch einen Abschnitt einer Außenkante des ersten Gehäuseteils unterbrochen sein. So erstreckt sich die Sollbruchstelle ausgehend von der Außenkante in das erste Gehäuseteil hinein und kehrt zu der Außenkante zurück. In dieser Ausführungsform ist der Befestigungsbereich einerseits von der Sollbruchstelle und andererseits von dem Abschnitt der Außenkante des ersten Gehäuseteils begrenzt und ist insbesondere von dem Teilabschnitt durch die Sollbruchstelle getrennt. Auch in diesem Fall kann sich beim Aufreißen der Sollbruchstelle der Befestigungsbereich des ersten Gehäuseteils von dem Teilabschnitt des ersten Gehäuseteils trennen. Die Form der Sollbruchstelle kann demnach beliebig gewählt werden, sofern die Sollbruchstelle eine vollständige Trennung des Befestigungsbereichs von dem Teilabschnitt des ersten Gehäuseteils ermöglicht.

Gemäß einer Ausführungsform kann das erste Gehäuseteil eine Vielzahl von Befestigungsbereichen aufweist, die jeweils über eine Sollbruchstelle mit dem Teilabschnitt des ersten Gehäuseteils verbunden sind, wobei die Befestigungsbereiche derart zueinander angeordnet sind, dass beim Aufreißen der Sollbruchstellen insgesamt eine Öffnung ausgebildet wird, durch die der sich entfaltende Gassack aus dem Gehäuse austritt. Diese Befestigungsbereiche können beispielsweise aufeinander folgend angeordnet sein, so dass eine Reihe von Befestigungsbereichen an entsprechende Sollbruchstellen grenzt. Dabei können die Sollbruchstellen insbesondere so dicht zueinander in einer Reihe angeordnet sein, dass beim Aufreißen der Sollbruchstellen auch Material des ersten Gehäuseteils, das sich unmittelbar zwischen den Sollbruchstellen befindet, aufbricht. Hierdurch kann erreicht werden, dass durch eine Reihe von kleinen lokalen Sollbruchstellen in der Summe eine große Öffnung bereitgestellt wird. Die Reihe von kleinen lokalen Sollbruchstellen stellt dabei eine geringere Schwächung des ersten Gehäuseteils dar als eine einzige Sollbruchstelle, durch die eine gleich große Öffnung erzeugt würde. Durch diese Maßnahme kann erreicht werden, dass das Gehäuse ausreichend stabil ist, um gewöhnlichen Erschütterungen im Fahrbetrieb eines Fahrzeugs standzuhalten, gleichzeitig jedoch zuverlässig durch einen sich ausdehnenden Gassack aufreißt, ohne dass die für das Öffnen des Gehäuses aufzubringenden Kräfte übermäßig hoch sein müssen.

Gemäß einer weiteren Ausführungsform kann das Gehäuse zwei Gehäuseteile umfassen, die jeweils als vom Kraftfahrzeug separate Komponenten ausgebildet sind. Dabei kann das mindestens eine erste Befestigungsmittel einerseits der Befestigung der beiden Gehäuseteile aneinander und andererseits der Befestigung des Gehäuses an einer Fahrzeugkomponente dienen. Die Fahrzeugkomponente kann insbesondere eine Motorhaube sein. Das mindestens eine erste Befestigungsmittel kann ein Befestigungselement zur form- und/oder kraftschlüssigen Verbindung umfassen, wie beispielsweise Schrauben, Nieten, Klemmen.

Gemäß einer Ausführungsform, in der das Gehäuse ein erstes und ein zweites Gehäuseteil umfasst, ist das zweite Gehäuseteil im montierten Zustand der Gassackanordnung zwischen dem ersten Gehäuseteil und einer Fahrzeugkomponente angeordnet, an der das Gehäuse mittels des mindestens einen ersten Befestigungsmittels befestigt ist. Somit kann sich beim Aufreißen der Sollbruchstelle(n) des ersten Gehäuseteils der aufschwingende Teilabschnitt des ersten Gehäuseteils möglichst frei bewegen und dem sich ausbreitenden Gassack eine möglichst große Öffnung zum Austritt aus dem Gehäuse bieten.

Gemäß einer weiteren Ausführungsform können das erste Gehäuseteil und das zweite Gehäuseteil des Gehäuses mittels mindestens eines zweiten Befestigungsmittels, das von dem mindestens einen ersten Befestigungsmittel verschieden ist, miteinander verbunden sein. Dabei kann sich das zweite Befestigungsmittel in seiner Art und / oder Größe von dem ersten Befestigungsmittel unterscheiden. So kann die durch das erste Befestigungsmittel geschaffene Verbindung nicht durch den sich entfaltenden Gassack lösbar sein, während die durch das zweite Befestigungsmittel geschaffene Verbindung durch den sich entfaltenden Gassack lösbar ist. Wenn eine Vielzahl von ersten und zweiten Befestigungsmitteln vorgesehen ist, so können diese in alternierender Reihenfolge (entlang der Umfangskanten (oder Abschnitten davon) des ersten und zweiten Gehäuseteils) oder in beliebig anderer Reihenfolge angeordnet sein. Während der Befestigungsbereich, in dem das erste Befestigungsmittel angeordnet ist, mit dem Teilabschnitt (oder Rest) des ersten Gehäuseteils durch eine Sollbruchstelle verbunden sein kann, die durch den sich entfaltenden Gassack aufreißt, braucht für den Befestigungsbereich, in dem das zweite Befestigungsmittel angeordnet ist, eine solche Sollbruchstelle nicht vorgesehen sein, wenn das zweite Befestigungsmittel (beziehungsweise die durch das zweite Befestigungsmittel geschaffene Verbindung) selbst bereits durch den sich entfaltenden Gassack lösbar ist. Zusammen mit der Sollbruchstelle, die den Befestigungsbereich des ersten Gehäuseteils des ersten Befestigungsmittels mit dem Rest des ersten Gehäuseteils verbindet, kann das zweite Befestigungsmittel durch den sich entfaltenden Gassack eine Öffnung freigeben, durch die der sich entfaltende Gassack dann aus dem Gehäuse austritt.

Gemäß einer Ausführungsform weist das mindestens eine zweite Befestigungsmittel einen Vorsprung und eine entsprechende Aufnahmeöffnung auf, wobei der Vorsprung von dem ersten Gehäuseteil absteht und die Aufnahmeöffnung in dem zweiten Gehäuseteil ausgebildet ist, wobei im verbundenen Zustand der Vorsprung durch die Aufnahmeöffnung ragt und die Aufnahmeöffnung hintergreift. Durch den sich entfaltenden Gassack kann sich diese Verbindung unter Verformung des Vorsprungs und / oder der Aufnahmeöffnung lösen. Dafür können der Vorsprung und das die Aufnahmeöffnung umgebende Material des zweiten Gehäuseteils beispielsweise aus einem Kunststoff gefertigt sein. Vorzugsweise sind die Materialeigenschaften so gewählt, dass der Vorsprung beim Öffnen des Gehäuses nicht zerbricht, sondern sich verformt.

Zur Herstellung der Verbindung zwischen dem ersten Gehäuseteil und dem zweiten Gehäuseteil durch den Vorsprung und die entsprechende Aufnahmeöffnung kann der Vorsprung zunächst in einer Form vorliegen, die es erlaubt, den Vorsprung in und durch die Aufnahmeöffnung zu führen. Anschließend kann die Form des Vorsprungs, insbesondere an seinem freien Ende, das über die Aufnahmeöffnung hinausragt, derart verändert werden, beispielsweise unter Einwirkung von Wärme und / oder mechanischer Kraft, dass der Vorsprung die Aufnahmeöffnung hintergreift.

Die Erfindung betrifft ebenfalls ein Kraftfahrzeug mit einer erfindungsgemäßen Gassackanordnung. Zum Schutz einer sich außerhalb des Kraftfahrzeugs befindlichen Person kann das erste Gehäuseteil der erfindungsgemäßen Gassackanordnung an der Motorhaube, insbesondere an der von außen nicht sichtbaren Unterseite der Motorhaube, befestigt sein.

Die Erfindung wird nachfolgend unter Bezugnahme auf die Zeichnungen näher erläutert. Es zeigen:
- Figur 1: eine Draufsicht auf eine an einer Motorhaube eines Kraftfahrzeugs angeordnete Gassackanordnung gemäß einer Ausführungsform der Erfindung;
- Figur 2: eine Schnittansicht der Gassackanordnung aus Figur 1 entlang der Linie A-A;
- Figur 3: eine perspektivische Darstellung eines Teils der Gassackanordnung aus Figur 1 mit zwei Befestigungsbereichen;
- Figur 4: eine Schnittansicht des in Figur 3 hinten dargestellten Befestigungsbereichs;
- Figur 5: eine perspektivische Darstellung des in Figur 3 vorn dargestellten Befestigungsbereichs mit einer Sollbruchstelle gemäß einer Ausführungsform;
- Figur 6: eine perspektivische Darstellung der Sollbruchstelle aus Figur 5 im Auslösefall;
- Figur 7: eine perspektivische Darstellung eines Befestigungsbereichs und einer Sollbruchstelle im Ruhezustand gemäß einer weiteren Ausführungsform;
- Figur 8: eine perspektivische Darstellung eines Teils der Gassackanordnung mit einem zweiten Befestigungsmittel;
- Figur 9: eine Schnittansicht des zweiten Befestigungsmittels aus Figur 8 im Ruhezustand; und
- Figur 10: eine Schnittansicht des zweiten Befestigungsmittels aus Figur 8 im Auslösefall.

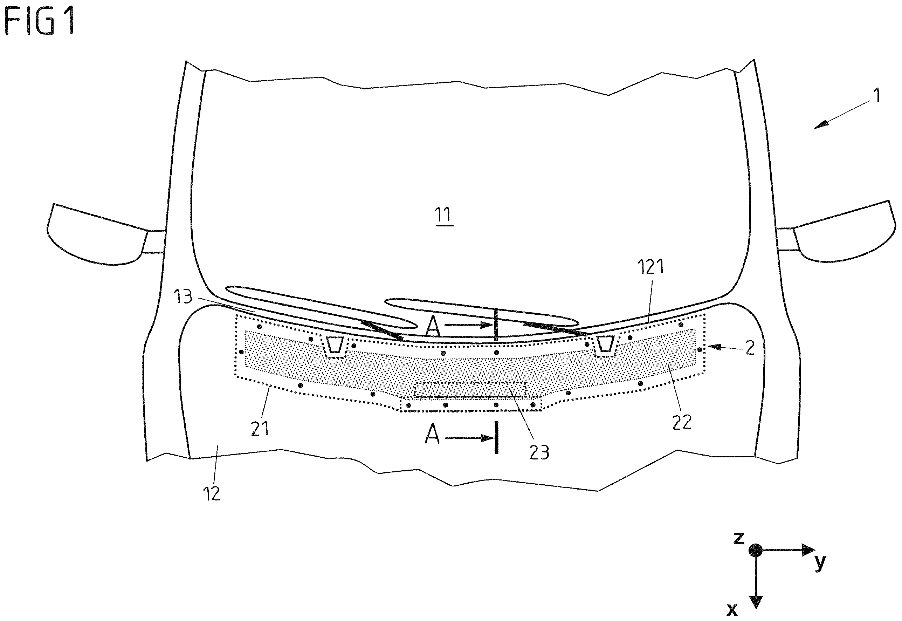

In Figur 1 ist in einer Draufsicht ein Kraftfahrzeug 1 dargestellt, an dem eine erfindungsgemäße Gassackanordnung 2 in Form eines Gassackmoduls angeordnet ist. Als Bestandteile des Kraftfahrzeugs 1 sind eine Frontscheibe 11 (Windschutzscheibe) und eine Abdeckung 12 in Form einer Motorhaube dargestellt. Der Windschutzscheibe 11 schließt sich (zu einem unterhalb der Motorhaube 12 befindlichen Motorraum des Fahrzeugs hin) ein Windlauf 13 an. Dabei befindet sich das Gassackmodul 2 im Ruhezustand unterhalb der Motorhaube 12 und erstreckt sich quer zu einer Fahrzeuglängsrichtung X entlang eines der Windschutzscheibe 11 zugewandten Randes 121 der Motorhaube 12. Dabei ist das Gassackmodul 2 so lang (quer zur Fahrzeuglängsrichtung X), dass es sich entlang des (nahezu) gesamten Randes 121 erstreckt.

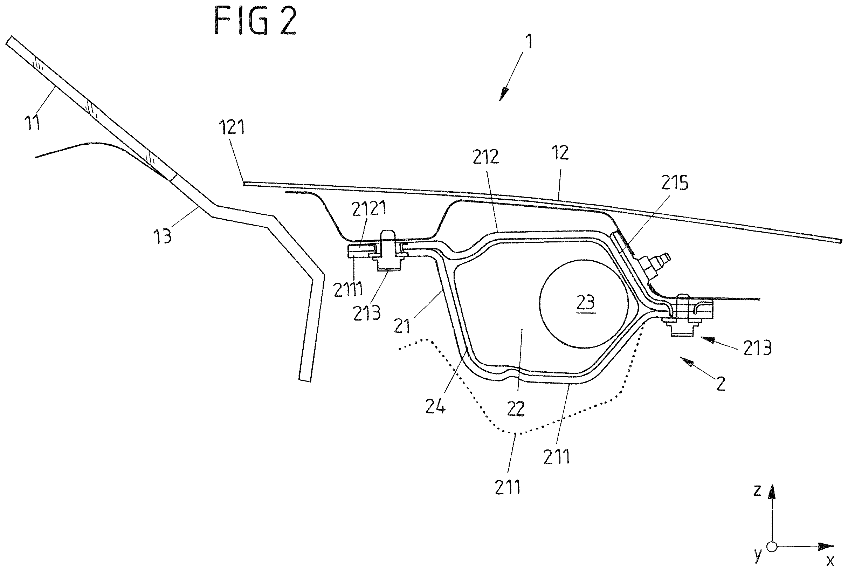

In Figur 2 ist eine Schnittdarstellung des Kraftfahrzeugs 1 und der Gassackanordnung 2 entlang der Linie A-A aus Figur 1 dargestellt. Die Gassackanordnung 2 weist ein Gehäuse 21 auf, in dem ein gefalteter Gassack 22 (z.B. in Form eines Gassackpakets) sowie ein Gasgenerator 23 zum Aufblasen des Gassacks 22 im Auslösefall angeordnet sind. Das Gehäuse 21 umfasst ein erstes Gehäuseteil 211 und ein zweites Gehäuseteil 212, wobei im bestimmungsgemäß angeordneten Zustand des Gehäuses 21 in dem Kraftfahrzeug 1 das erste Gehäuseteil 211 dem Motorraum zugewandt ist und das zweite Gehäuseteil 212 der Motorhaube 12. Um das Gewicht der Gassackanordnung 2 insgesamt möglichst gering zu halten, sind die beiden Gehäuseteile 211, 212 bevorzugt aus einem Kunststoff gefertigt.

Jedes Gehäuseteil 211, 212 ist im Wesentlichen trogförmig ausgebildet und weist eine flanschartige Umfangskante 2111, 2121 auf. Jede flanschartige Umfangskante 2111, 2121 erstreckt sich, im bestimmungsgemäß angeordneten Zustand senkrecht zur Motorhaube 12 des Kraftfahrzeugs 1 betrachtet, entlang des gesamten Umfangs des jeweiligen Gehäuseteils 211, 212. Zur Ausbildung des Gehäuses 21 werden die Gehäuseteile 211, 212 so zueinander angeordnet, dass die flanschartigen Umfangskanten 2111, 2121 aufeinander zu liegen kommen und dass die Gehäuseteile 211, 212 einen Hohlraum 24 zur Unterbringung des Gassacks 22 und des Gasgenerators 23 umschließen.

Die beiden Gehäuseteile 211, 212 sind entlang der flanschartigen Umfangskanten 2111, 2121 miteinander verbunden, wobei die flanschartigen Umfangskanten 2111, 2121 flächig aufeinander zu liegen kommen. Durch die Verbindung der Gehäuseteile 211, 212 ist das Gehäuse 21 gegenüber der Umgebung abgedichtet, insbesondere um die im Gehäuse 21 befindlichen Modulkomponenten (Gassack 22, Gasgenerator 23) vor der Einwirkung von Feuchtigkeit und Fremdkörpern zu schützen. Im bestimmungsgemäß angeordneten Zustand des Gehäuses 21 erstrecken sich die beiden miteinander verbundenen flanschartigen Umfangskanten 2111, 2121 annähernd parallel zur Motorhaube 12.

Die beiden Gehäuseteile 211, 212 sind punktuell entlang der gesamten flanschartigen Umfangskanten 2111, 2121 miteinander verbunden. Das heißt, jede flanschartige Umfangskante 2111, 2121 umfasst eine Vielzahl von flächenmäßig begrenzten und voneinander beabstandeten beziehungsweise aneinander angrenzenden Befestigungsbereichen 2112, 2122, die über die jeweiligen Umfangskanten 2111, 2121 verteilt sind. Dabei sind die Anzahl und Anordnung der Befestigungsbereiche 2112, 2122 derart gewählt, dass bei bestimmungsgemäßer Anordnung der beiden Gehäuseteile 211, 212 zueinander jeweils ein Befestigungsbereich 2112 der einen Umfangskante 2111 auf einem entsprechenden Befestigungsbereich 2122 der anderen Umfangskante 2121 zu liegen kommt. Für jedes solcher Befestigungsbereichspaare ist ein erstes Befestigungsmittel 213 vorgesehen. In der Ausführungsform der Figur 2 umfasst das erste Befestigungsmittel 213 eine Schraube 2131 als Befestigungselement, eine Unterlegscheibe 2132 und eine mit einem Innengewinde versehenen Gewindestruktur (nicht dargestellt) zur Ausbildung einer Schraubverbindung. Anstelle einer Schraubverbindung kann das erste Befestigungsmittel 213 auch eine Rast-, Niet- oder Klebeverbindung bereitstellen. Das erste Befestigungsmittel 213 ist so ausgelegt, dass es sich im Auslösefall, das heißt durch den sich entfaltenden Gassack 22, nicht löst.

Das erste Befestigungsmittel 213 dient einerseits der Befestigung des ersten und des zweiten Gehäuseteils 211, 212 aneinander und andererseits der Befestigung des Gehäuses 21 insgesamt an der Motorhaube 12. Zur Befestigung des Gehäuses 21 an der Motorhaube 12 wird die Schraube 2131 des ersten Befestigungsmittels 213 mit Gewindestrukturen (nicht dargestellt) verbunden, welche an Verstärkungen (Versteifungs-/Verstärkungsteile) der Motorhaube 12 angeordnet sind. Die Gewindestrukturen können beispielsweise als in die Verstärkungen integrierte Gewindeeinsätze ausgebildet sein.

Aufgrund erhöhter Belastungen des Gehäuses 21 (insbesondere des zweiten Gehäuseteils 212) im Bereich des Gasgenerators 23 bei dessen Aktivierung ist ein Verstärkungsblech 215 vorgesehen. Das Verstärkungsblech 215 ist insbesondere mittels einem oder mehreren ersten Befestigungsmitteln 213 an dem zweiten Gehäuseteil 212 festgelegt. Diese ersten Befestigungsmittel 213 dienen auch der Festlegung des Gehäuses 21 an der Motorhaube 12, wobei das Verstärkungsblech 215 zum Beispiel zwischen dem zweiten Gehäuseteil 212 und der Verstärkung der Motorhaube 12 eingeklemmt wird. Das Verstärkungsblech kann derart ausgelegt sein, dass es ferner der Befestigung des Gasgenerators 23 (und somit des Gassackes 22) am zweiten Gehäuseteil 212 dient. Hierfür können von dem Gasgenerator 23 abragende Gewindebolzen und mit den Gewindebolzen in Eingriff bringbare Muttern vorgesehen sein.

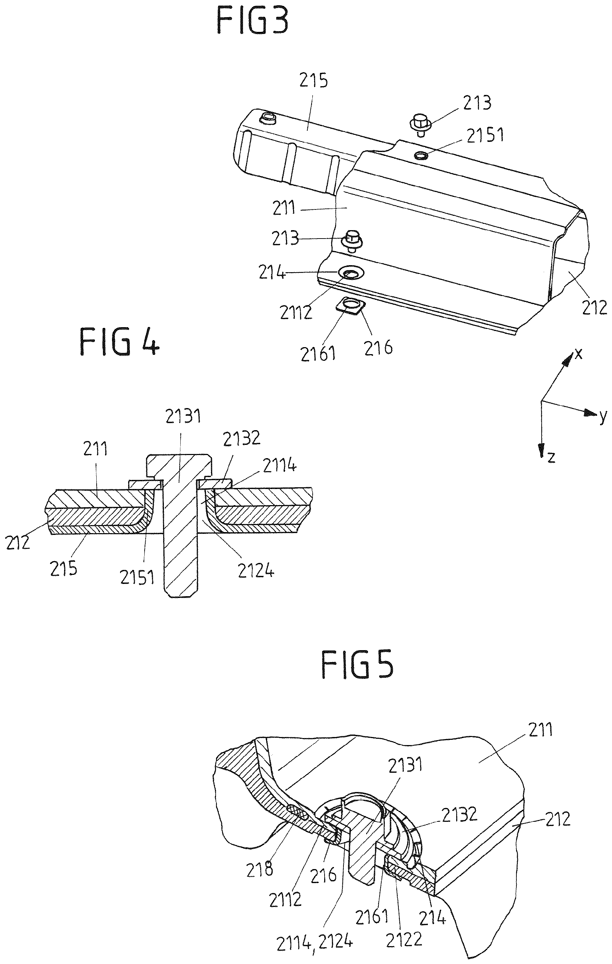

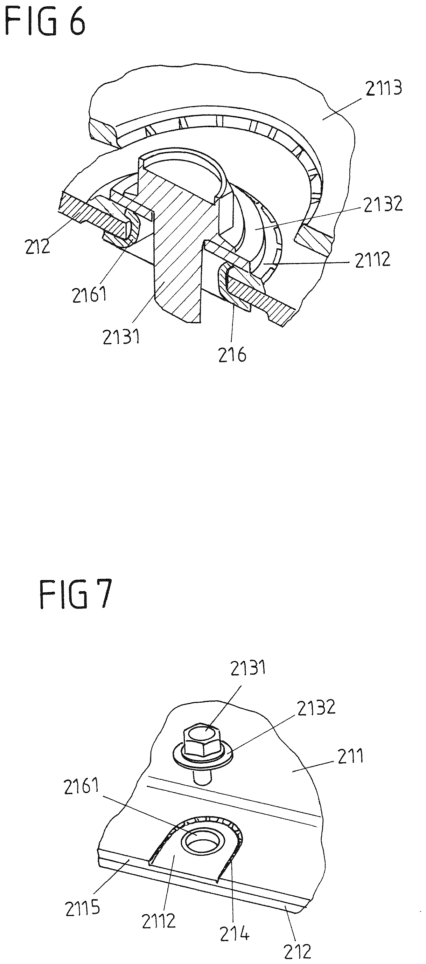

Die Befestigungsbereiche 2112, 2122 erstrecken sich in der Ausführungsform aus Figur 2 in gleichmäßigen Abständen entlang der gesamten flanschartigen Umfangskanten 2111, 2121. Gemäß einer alternativen Ausführungsform können sich die Befestigungsbereiche 2112, 2122 auch nur entlang eines Abschnitts (oder mehrerer Abschnitte) der flanschartigen Umfangskanten 2111, 2121 erstrecken. In der Ausführungsform aus Figur 2 ist eine Reihe von nebeneinander angeordneten Befestigungsbereichen 2112 des ersten Gehäuseteils 211 jeweils über eine Sollbruchstelle 214, die im Auslösefall durch den sich entfaltenden Gassack 22 aufreißt, mit einem Teilabschnitt 2113 des ersten Gehäuseteils 211 verbunden. Der Teilabschnitt 2113 wird durch den Rest des ersten Gehäuseteils 211 außerhalb der Befestigungsbereiche 2112 gebildet. Dabei ist für jeden Befestigungsbereich 2112 eine entsprechende Sollbruchstelle 214 vorgesehen. Dementsprechend gibt es eine Reihe von nebeneinander angeordneten Sollbruchstellen 214, die im Auslösefall alle aufreißen. Nach der Aktivierung des Gasgenerators 23 wird das Gehäuse 21 durch den sich entfaltenden Gassack 22 geöffnet, wie im Zusammenhang mit den Figuren 5 und 6 erläutert werden wird. Die geöffnete Stellung des ersten Gehäuseteils 211 wird in Figur 2 durch eine gepunktete Linie angedeutet.

Wie in Figur 3 gezeigt ist, sind die Sollbruchstellen 214 Befestigungsbereichen 2112 zugeordnet, die der Frontscheibe 11 zugewandt sind, das heißt Befestigungsbereichen 2112, die in Fahrtrichtung (X-Richtung) betrachtet hinten liegen. Dabei erstreckt sich die Reihe von Sollbruchstellen 214 im Wesentlichen entlang des (gesamten) Abschnitts der flanschartigen Umfangskante 2111, der der Frontscheibe 11 zugewandt ist und der sich im Wesentlichen parallel zu dem Rand 121 der Motorhaube 12 erstreckt. Darüber hinaus kann sich die Reihe von Sollbruchstellen 214 auch entlang eines Abschnitts der flanschartigen Umfangskante 2111 erstrecken, der sich im Wesentlichen senkrecht zu dem Rand 121 in Fahrtrichtung X nach vorn erstreckt. Die Sollbruchstellen 214 bilden einen öffenbaren Bereich des Gehäuses 21. Die Befestigungsbereiche 2112 des ersten Gehäuseteils 211 in dem Abschnitt der flanschartigen Umfangskante 2111, der der Frontscheibe 11 abgewandt ist und der sich im Wesentlichen parallel zu dem Rand 121 der Motorhaube 12 erstreckt, (das heißt die Befestigungsbereiche 2112, die in Fahrtrichtung (X-Richtung) betrachtet vorn liegen) sind nicht über Sollbruchstellen 214 mit dem Teilabschnitt 2113 des ersten Gehäuseteils 211 verbunden. In diesem Abschnitt der flanschartigen Umfangskante 2111 ist das Gehäuse 21 nicht öffenbar.

In Figur 4 ist eine Schnittansicht durch das erste Gehäuseteil 211 und das zweite Gehäuseteil 212 mit den in Figur 3 hinten dargestellten Befestigungsbereichen 2112, 2121 dargestellt, das heißt mit dem Befestigungsbereich 2112 des ersten Gehäuseteils 211 ohne Sollbruchstelle. Die durch das hier angeordnete erste Befestigungsmittel 213 bereitgestellte Verbindung ist durch den sich entfaltenden Gassack 22 nicht öffenbar. Die entsprechenden Befestigungsbereiche 2112, 2122 des ersten und zweiten Gehäuseteils 211, 212 sind mit deckungsgleichen Befestigungsöffnungen 2114, 2124 versehen, die von dem ersten Befestigungsmittel 213 durchragt werden.

Für die Montage wird die Schraube 2131 (als Teil des ersten Befestigungsmittels 213) mit der Unterlegscheibe 2132 (als Teil des ersten Befestigungsmittels 213) versehen und durch die deckungsgleichen Befestigungsöffnungen 2114, 2124 geführt. Dabei wird die Unterlegscheibe 2132 zur Anlage an den Befestigungsbereich 2112 des ersten Gehäuseteils 211 gebracht. Durch das Zusammenwirken der Schraube 2131 mit einem nicht dargestellten Gegengewinde (z.B. einem Gewindeeinsatz in einer Verstärkung der Motorhaube 12) werden die flanschartigen Umfangskanten 2111, 2121 des ersten und zweiten Gehäuseteils 211, 212 gegeneinander verspannt, wobei die Einleitung der Kraft über den Kontakt der Unterlegscheibe 2132 mit dem Befestigungsbereich 2112 des ersten Gehäuseteils 211 erfolgt. Gleichzeitig erfolgt hiermit die Befestigung des Gehäuses 21 an der Motorhaube 12.

Wie bereits erwähnt, ist das Gehäuse 21 bevorzugt aus einem Kunststoff gefertigt. Um jedoch ein hohes Anzugsmoment erreichen zu können, ist ein sogenannter harter Schraubfall zu bevorzugen. Bei einem harten Schraubfall steigt das Drehmoment gegen Ende der Verschraubung sprunghaft an. Ein harter Schraubfall liegt bei Verschraubung in einem harten Material, wie beispielsweise einem Metall vor. Um einen solchen harten Schraubfall zu erreichen, ist das Verstärkungsblech 215 mit buchsenförmigen Ansätzen 2151 versehen, welche in die zugeordneten Befestigungsöffnungen 2114, 2124 der der beiden Gehäuseteile 211, 212 hineinragen. Dabei ist das zweite Gehäuseteil 212 zwischen dem ersten Gehäuseteil 211 und dem Verstärkungsblech 215 angeordnet. Vorzugsweise ist für jeden Befestigungsbereich 2112, 2122, der mit dem Verstärkungsblech 215 in Verbindung gebracht wird, ein buchsenförmiger Ansatz 2151 vorgesehen. Innen weist jeder buchsenförmige Ansatz 2151 eine Öffnung zum Durchführen der Schraube 2131 auf. Vor dem Anziehen der Schaube 2131 überragen die aneinander anliegenden flanschartigen Umfangskanten 2111, 2121 in den Befestigungsbereichen 2112, 2122 der beiden Gehäuseteile 211, 212 die Höhe des Ansatzes 2151. Während die Unterlegscheibe 2132 an dem ersten Gehäuseteil 211 anliegt, liegt das Verstärkungsblech 215 an dem zweiten Gehäuseteil 212 an. Der buchsenförmige Ansatz 2151 ragt also vor dem Anziehen der Schraube 2131 durch die Befestigungsöffnungen 2114, 2124 in Richtung auf die Unterlegscheibe 2132, ohne diese zu berühren. Erst beim Anziehen der Schraube 2131, nämlich durch Deformation (Zusammenpressen) der Befestigungsbereiche 2112, 2122 des ersten und des zweiten Gehäuseteils 211, 212 gelangt der buchsenförmige Ansatz 2151 mit der Unterlegscheibe 2132 in Kontakt. Durch weiteres Anziehen der Schraube 2131 wird das notwendige Anzugsmoment (harter Schraubfall) aufgebracht, ohne dabei die Befestigungsbereiche 2112, 2122 weiter zu deformieren.

Für Befestigungsbereiche 2112, 2122 ohne Verstärkungsblech wird zum Erreichen des harten Schraubfalls eine separate Scheibe 216 mit einem buchsenförmigen Ansatz 2161 verwendet, wie sie in den Figuren 3 (vorn) und 5 dargestellt ist. Die separate Scheibe 216 ist aus einem Metall gefertigt, ebenso wie das Verstärkungsblech 215. Die Funktionsweise des buchsenförmigen Ansatzes 2161 der separaten Scheibe 216 ist identisch mit der Funktionsweise des buchsenförmigen Ansatzes 2151 des Verstärkungsblechs 215. Die Verwendung des Verstärkungsblechs 215 beziehungsweise der separaten Scheibe 216 ermöglicht es, das Gehäuse 21 in einem beliebigen, möglichst leichten Material zu fertigen. Durch geeignete Materialwahl bei dem Verstärkungsblech 215 und der separaten Scheibe 216 kann dennoch der sogenannte harte Schraubfall erreicht werden.

Der Befestigungsbereich 2112 mit der Sollbruchstelle 214 aus Figur 3 (dort vorn) ist in Figur 5 vergrößert dargestellt. Dieser Befestigungsbereich 2112 befindet sich in Fahrzeuglängsrichtung betrachtet hinter dem Befestigungsbereich 2112 ohne Sollbruchstelle. Das erste Befestigungsmittel 213 wird wie bereits im Zusammenhang mit dem Befestigungsbereich 2112 ohne Sollbruchstelle (aus Figur 4) beschrieben, festgelegt. Lediglich werden zur Ausbildung des harten Schraubfalls ausschließlich separate Scheiben 216 mit buchsenförmigem Ansatz 2161 verwendet.

Die Sollbruchstelle 214 ist als eine Schwächung des Materials in Form einer die Befestigungsöffnung 2114 des ersten Gehäuseteils 211 umlaufenden Nut ausgebildet. Quer zur Erstreckungsrichtung der Nut sind in der Ausführungsform aus Figur 5 Stege 2141 als Verstärkung vorgesehen. Die Stege 2141 können in beliebiger Anzahl, Form und Anordnung vorgesehen sein. Alternativ kann auf die Stege auch verzichtet werden. Die Sollbruchstelle aus Figur 5 bildet eine die Befestigungsöffnung 2114 vollständig umgebende Kontur. Die Kontur ist kreisförmig dargestellt, jedoch sind andere Formen für die geschlossene Kontur denkbar. Die Sollbruchstelle 214 ist so dimensioniert, dass der von der Sollbruchstelle 214 umgebene Befestigungsbereich 2112 mindestens die Größe der Unterlegscheibe 2132 hat, so dass die Unterlegscheibe 2132 zum Deformieren der Befestigungsbereiche 2112, 2122 eine maximale Kontaktfläche mit dem Befestigungsbereich 2112 des ersten Gehäuseteils 211 hat. Insbesondere ragt die Unterlegscheibe 2132 nicht über den Befestigungsbereich 2112 des ersten Gehäuseteils 211 hinaus, so dass sie keinen Kontakt mit dem Teilabschnitt 2113 des ersten Gehäuseteils 211 hat. Jede Sollbruchstelle 214 für sich ist relativ kurz ausgebildet sein, so dass sie durch Erschütterungen im üblichen Fahrbetrieb des Kraftfahrzeugs 1 nicht aufreißt. Erst im Auslösefall reißen alle Sollbruchstellen 214 zusammen auf, so dass insgesamt eine gemeinsame Öffnung entsteht, durch die der sich entfaltende Gassack 22 aus dem Gehäuse 21 austreten kann.

Figur 6 zeigt die Sollbruchstelle 214 aus Figur 5 unmittelbar nach der Aktivierung des Gasgenerators 23. Der sich entfaltende Gassack 22 übt eine Kraft auf das Gehäuse 21 aus, was zum Aufreißen der Sollbruchstellen 214 führt. Im Ergebnis öffnet sich das Gehäuse 21 in dem gesamten Bereich, in dem die Sollbruchstellen 214 ausgebildet waren. Der Teilabschnitt 2113 beziehungsweise das erste Gehäuseteil 211 löst sich in diesem Bereich der flanschartigen Umfangskante 2111 vom zweiten Gehäuseteil 212, schwenkt weg und gibt eine Öffnung für das Austreten des Gassackes 22 aus dem Gehäuse 21 frei. Der unterhalb der Unterlegscheibe 2132 verbleibenden Befestigungsbereich 2112 des ersten Gehäuseteils 211 (Auflagebereich) und das zweite Gehäuseteil 212 bleiben fest miteinander verbunden. Insgesamt bleibt das gesamte Gehäuse 21 mit der Motorhaube 12 verbunden, denn das Aufreißen der Sollbruchstellen 214 beeinträchtigt nicht die Festigkeit der Verbindung der ersten Befestigungsmittel 213.

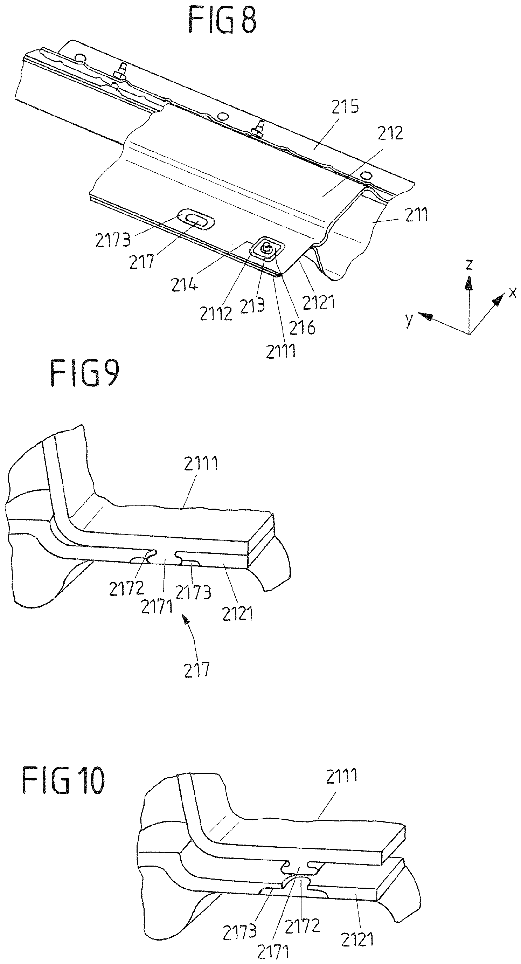

Die Figur 7 zeigt eine alternative Ausführung der Sollbruchstelle 214 in der flanschartigen Umfangskante 2111 des ersten Gehäuseteils 211. Im Unterschied zu der Ausführungsform in Figur 5 umgibt hier die Sollbruchstelle 214 den Befestigungsbereich 2112 nicht vollständig, sondern verläuft U-förmig. Der Befestigungsbereich 2112 grenzt an eine Außenkante 2115 des ersten Gehäuseteils 211. Zwischen den beiden Enden der U-förmigen Sollbruchstelle 214 erstreckt sich ein Abschnitt der Außenkante 2115. Somit wird ermöglicht, dass sich der Teilabschnitt 2113 (trotz der nicht geschlossenen Kontur der Sollbruchstelle 214) von dem Befestigungsbereich 2112 des ersten Gehäuseteils 211 lösen kann. Wie jedoch bereits bei der geschlossenen Kontur der Sollbruchstelle 214 aus Figur 5 ist die Größe der Sollbruchstelle 214 derart zu bemessen, dass sich die Unterlegscheibe 2132 nicht über den Befestigungsbereich 2112 des ersten Gehäuseteils 211 auf die Sollbruchstelle 214 erstreckt.
Gemäß einer in den Figuren 8 bis 10 dargestellten Ausführungsform wird zur Befestigung des ersten und des zweiten Gehäuseteils 211, 212 aneinander zusätzlich zu dem ersten Befestigungsmittel 213 ein zweites Befestigungsmittel 217 eingesetzt. Im Gegensatz zu dem ersten Befestigungsmittel 213 ist das zweite Befestigungsmittel 217 nicht zur Befestigung des Gehäuses 21 an der Motorhaube 12 vorgesehen, sondern dient lediglich dem Verbinden der beiden Gehäuseteile 211, 212. Ferner ist das zweite Befestigungsmittel 217 derart ausgelegt, dass die dadurch bereitgestellte Verbindung sich durch den sich entfaltenden Gassack 22 löst. Dementsprechend trägt das zweite Befestigungsmittel 217 im Auslösefall zur Ausbildung der Öffnung bei, durch die der Gassack 22 aus dem Gehäuse 21 austritt. Hierzu ist das zweite Befestigungsmittel 217 in der Ausführungsform der Figuren 8 bis 10 alternierend mit dem ersten Befestigungsmittel 213 angeordnet, und zwar ausschließlich in dem Bereich der flanschartigen Umfangskanten 2111, 2121, in dem eine Öffnung des Gehäuses 21 für den sich entfaltenden Gassack 22 gebildet werden soll. Dieser Bereich erstreckt sich im Wesentlichen entlang des (gesamten) Abschnitts der flanschartigen Umfangskanten 2111, 2121 der der Frontscheibe 11 zugewandt ist und der sich im Wesentlichen parallel zu dem Rand 121 der Motorhaube 12 erstreckt. Darüber hinaus kann sich dieser Bereich auch entlang eines Abschnitts der flanschartigen Umfangskanten 2111, 2121 erstrecken, der sich im Wesentlichen senkrecht zu dem Rand 121 in Fahrtrichtung X nach vorn erstreckt. Neben einer alternierenden Anordnung von ersten und zweiten Befestigungsmitteln 213, 217 in diesem Bereich, ist auch eine Anordnung möglich, bei der die ersten und zweiten Befestigungsmittel 213, 217 jeweils gruppiert sind und sich eine Gruppe aus ersten Befestigungsmitteln 213 an eine Gruppe aus zweiten Befestigungsmitteln 217 (entlang der flanschartigen Umfangskanten 2111, 2121 betrachtet) anschließt. Dabei kann auch die Anzahl und / oder Größe der Gruppe aus ersten Befestigungsmitteln 213 und der Gruppe aus zweiten Befestigungsmitteln 217 variiert werden.

Das zweite Befestigungsmittel 217 umfasst einen Vorsprung 2171, der an der flanschartigen Umfangskante 2111 des ersten Gehäuseteils 211 ausgebildet und auf die flanschartige Umfangskante 2121 des zweiten Gehäuseteils 212 gerichtet ist. Zudem umfasst das zweite Befestigungsmittel 217 eine Aufnahmeöffnung 2172, die in der flanschartigen Umfangskante 2121 des zweiten Gehäuseteils 212 ausgebildet ist und derart angeordnet ist, dass die Aufnahmeöffnung 2172 im befestigten Zustand von dem Vorsprung 2171 durchragt und hintergriffen wird, wie in Figur 9 dargestellt. An seinem freien Ende weist der Vorsprung 2171 eine Verbreiterung auf, mit welcher der Vorsprung 2171 die Aufnahmeöffnung 2172 hintergreift. Zur Unterbringung der Verbreiterung ist auf der dem ersten Gehäuseteil 211 abgewandten Seite der flanschartigen Umfangskante 2121 des zweiten Gehäuseteils 212 eine Ausnehmung 2173 vorgesehen. Alternativ kann auf die Ausnehmung verzichtet werden.

Zur Herstellung einer Verbindung zwischen dem ersten und dem zweiten Gehäuseteil 211, 212 durch das zweite Befestigungsmittel 217 wird der Vorsprung 2171 an der flanschartigen Umfangskante 2111 des ersten Gehäuseteils 211 in einer Ausgangskonfiguration bereitgestellt, in der der Vorsprung 2171 an keiner Stelle einen größeren Querschnitt als die Aufnahmeöffnung 2172 aufweist. Der Vorsprung 2171 in der Ausgangskonfiguration kann in die Aufnahmeöffnung 2172 eingeführt werden und diese durchragen, so dass der Vorsprung 2171 mit seinem freien Ende über die Aufnahmeöffnung 2172 und gegebenenfalls (insbesondere wenn keine Ausnehmung vorhanden ist) über die flanschartige Umfangskante 2121 es zweiten Gehäuseteils 212 hinausragt. Anschließend wird das freie herausragende Ende mechanisch und / oder thermisch umgeformt, so dass sich das freie Ende derart verbreitert (quer zur Fügerichtung), dass es die Aufnahmeöffnung 2172 hintergreift und das erste und das zweite Gehäuseteil 211, 212 miteinander verbindet (Figur 9). Die Verbreiterung des Vorsprungs 2171 ist dann in der Ausnehmung 2173 angeordnet (oder an der dem ersten Gehäuseteil 211 abgewandten Seite der flanschartigen Umfangskante 2121 des zweiten Gehäuseteils 212 falls keine Ausnehmung vorhanden ist).

Figur 10 zeigt das zweite Befestigungsmittel 217 aus Figur 9 unmittelbar nach der Aktivierung des Gasgenerators 23. Der sich entfaltende Gassack 22 übt eine Kraft auf das Gehäuse 21 aus, was zu einer Verformung des Vorsprungs 2171 (insbesondere der Verbreiterung) bzw. der zugeordneten Aufnahmeöffnung 2172 führt. Die Verbreiterung wird durch die Aufnahmeöffnung 2172 von der flanschartigen Umfangskante 2121 des zweiten Gehäuseteils 212 weg gezogen, so dass die durch das zweite Befestigungsmittel 217 bereitgestellte Verbindung gelöst wird. Gleichzeitig reißen auch die Sollbruchstellen 214, die einen Teil der Befestigungsbereiche 2112 der ersten Befestigungsmittel 213 begrenzen. Insgesamt trennt sich der Teilabschnitt 2113 von den Befestigungsbereichen, schwenkt weg und gibt eine Öffnung für das Austreten des Gassackes 22 aus dem Gehäuse 21 frei.

Zur Abdichtung des von dem ersten und zweiten Gehäuseteil 211, 212 umschlossenen Hohlraums 24 zur Unterbringung des Gassacks 22 und des Gasgenerators 23 gegenüber Umwelteinflüssen kann zwischen den flanschartigen Umfangskanten 2111, 2121 der beiden Gehäuseteile 211, 212 eine Dichtung 218 vorgesehen sein, die beispielhaft in Figur 5 dargestellt ist. Das Ausführungsbeispiel aus Figur 5 kann auch ohne die Dichtung ausgeführt sein. Generell kann die Dichtung 218 jedoch für sämtliche Ausführungsformen eingesetzt werden. Die Dichtung 218 verläuft entlang der gesamten flanschartigen Umfangskanten 2111, 2121 und ist bevorzugt mit einer geschlossenen Kontur, beispielsweise ringförmig, ausgeführt.

Die Dichtung 218 kann in Form einer festen Dichtung (z.B. aus einem Elastomer) vor dem Zusammenfügen der beiden Gehäuseteile 211, 212 zwischen die flanschartigen Umfangskanten 2111, 2121 gelegt werden (z.B. in dafür vorgesehene Vertiefungen). Die Dichtung 218 kann dabei sowohl als Flachdichtung ausgeführt, als auch mit einem beliebigen anderen Querschnitt (zum Beispiel rund) versehen sein.

Alternativ kann die Dichtung 218 in Form einer flüssigen (beziehungsweise pastösen) Dichtung vorliegen, wobei sich der Ausdruck flüssig auf den Aggregatzustand beim Anbringen der Dichtung 218 bezieht. Die flanschartige Umfangskante eines der beiden Gehäuseteile 211, 212 wird hierfür über ihre gesamte Länge mittels eines geeigneten Spenderwerkzeugs mit einem raupenförmigen Streifen der flüssigen Dichtungsmasse versehen. Diese Dichtungsmasse besitzt eine Konsistenz, die ein Breitfließen verhindert. Das derart benetzte Gehäuseteil wird in einem Ofen über einen definierten Zeitraum einer definierten Temperatur ausgesetzt. Dadurch härtet die Dichtungsmasse aus, behält aber definierte elastische Eigenschaften. Im Ergebnis liegt das Gehäuseteil mit einer daran haftenden festen elastischen Dichtung 218 vor und kann weiter verwendet werden. Eine solche Dichtungsmasse ist beispielsweise das flüssige Silikon XIAMETER® RBL-9694-30P.

Die Erfindung wurde im Zusammenhang mit einem Gehäuse 21 beschrieben, welches zwei relativ formstabile Gehäuseteile 211, 212 umfasst. Jedoch erstreckt sich die Erfindung auch auf Ausführungen mit nur einem Gehäuseteil, beziehungsweise auf Ausführungen bei denen ein zweites Gehäuseteil als Folie vorliegt und das Gassackmodul lediglich über ein erstes

Gehäuseteil mit der Motorhaube verbunden ist. Weiterhin erstreckt sich die Erfindung auch auf Gassackanordnungen (mit einteiligen oder mehrteiligen Gehäusen), die nicht mit der Motorhaube verbunden sind.

## Patentansprüche

1. Gassackanordnung (2) für ein Kraftfahrzeug (1) mit,
- einem Gassack (22), der zum Schutz einer sich außerhalb oder innerhalb des Kraftfahrzeugs (1) befindlichen Person entfaltbar ist,
- einem Gehäuse (21), in dem der Gassack (22) vor dem Entfalten angeordnet ist, und
- mindestens einem ersten Befestigungsmittel (213), über das ein erstes Gehäuseteil (211) des Gehäuses (21) mit einem zweiten Gehäuseteil (212) des Gehäuses (21) und / oder mit einer Fahrzeugkomponente verbindbar ist, wobei das mindestens eine erste Befestigungsmittel (213) in einem Befestigungsbereich (2112) des ersten Gehäuseteils (211) angeordnet ist,
wobei der Befestigungsbereich (2112) des ersten Gehäuseteils (211) über eine Sollbruchstelle (214) mit einem Teilabschnitt (2113) des ersten Gehäuseteils (211) verbunden ist, wobei die Sollbruchstelle (214) durch den sich entfaltenden Gassack (22) aufreißbar ist, so dass sich der Teilabschnitt (2113) des ersten Gehäuseteils (211) von dem zweiten Gehäuseteil (212) beziehungsweise der Fahrzeugkomponente löst, während der Befestigungsbereich (2112) des ersten Gehäuseteils (211) weiterhin über das mindestens eine erste Befestigungsmittel (213) mit dem zweiten Gehäuseteil (212) beziehungsweise der Fahrzeugkomponente verbunden bleibt,
**dadurch gekennzeichnet,**
**dass** sich die Sollbruchstelle (214) im bestimmungsgemäß angeordneten Zustand des mindestens einen ersten Befestigungsmittels (213) zumindest abschnittsweise um das mindestens eine erste Befestigungsmittel (213) erstreckt.

2. Gassackanordnung (2) nach Anspruch 1, **dadurch gekennzeichnet, dass** die Sollbruchstelle (214) im bestimmungsgemäß angeordneten Zustand des mindestens einen ersten Befestigungsmittels (213) in unmittelbarer Nähe zu dem mindestens einen ersten Befestigungsmittel (213) vorgesehen ist.

3. Gassackanordnung (2) nach Anspruch 1 oder 2, **dadurch gekennzeichnet, dass** die Sollbruchstelle (214) im bestimmungsgemäß angeordneten Zustand des mindestens einen ersten Befestigungsmittels (213) das mindestens eine erste Befestigungsmittel (213) als geschlossene Kontur umgibt.

4. Gassackanordnung (2) nach Anspruch 1 oder 2, **dadurch gekennzeichnet, dass** das erste Gehäuseteil (211) eine Außenkante (2115) aufweist und dass die Sollbruchstelle (214) durch einen Abschnitt der Außenkante (2115) des ersten Gehäuseteils (211) unterbrochen ist.

5. Gassackanordnung (2) nach einem der vorherigen Ansprüche, **dadurch gekennzeichnet, dass** das erste Gehäuseteil (211) eine Vielzahl von Befestigungsbereichen (2112) aufweist, die jeweils über eine Sollbruchstelle (214) mit dem Teilabschnitt (2113) des ersten Gehäuseteils (211) verbunden sind, wobei die Befestigungsbereiche (2112) derart zueinander angeordnet sind, dass beim Aufreißen der Sollbruchstellen (214) insgesamt eine Öffnung ausgebildet wird, durch die der sich entfaltende Gassack (22) aus dem Gehäuse (22) austritt.

6. Gassackanordnung (2) nach einem der vorherigen Ansprüche, **dadurch gekennzeichnet, dass** das mindestens eine erste Befestigungsmittel (213) ein Befestigungselement zur form- und/oder kraftschlüssigen Verbindung umfasst.

7. Gassackanordnung (2) nach einem der vorherigen Ansprüche, **dadurch gekennzeichnet, dass** die Fahrzeugkomponente eine Motorhaube (12) ist.

8. Gassackanordnung (2) nach einem der vorherigen Ansprüche, **dadurch gekennzeichnet, dass** das zweite Gehäuseteil (212) im montierten Zustand der Gassackanordnung (2) zwischen dem ersten Gehäuseteil (211) und der Fahrzeugkomponente angeordnet ist.

9. Gassackanordnung (2) nach einem der vorherigen Ansprüche, **dadurch gekennzeichnet, dass** das erste Gehäuseteil (211) und das zweite Gehäuseteil (212) mittels mindestens eines zweiten Befestigungsmittels (217), das von dem mindestens einen ersten Befestigungsmittel (213) verschieden ist, miteinander verbunden sind.

10. Gassackanordnung (2) nach Anspruch 9, **dadurch gekennzeichnet, dass** die Verbindung, die durch das mindestens eine zweite Befestigungsmittel (217) bereitgestellt wird, durch den sich entfaltenden Gassack (22) lösbar ist.

11. Gassackanordnung (2) nach Anspruch 9 oder 10, **dadurch gekennzeichnet, dass** das mindestens eine zweite Befestigungsmittel (217) einen Vorsprung (2171) und eine entsprechende Aufnahmeöffnung (2172) aufweist, wobei der Vorsprung (2171) von dem ersten Gehäuseteil (211) absteht und die Aufnahmeöffnung (2172) in dem zweiten Gehäuseteil (212) ausgebildet ist, wobei im verbundenen Zustand der Vorsprung (2171) durch die Aufnahmeöffnung (2172) ragt und die Aufnahmeöffnung (2172) hintergreift.

12. Kraftfahrzeug (1) mit einer Gassackanordnung (2) nach einem der vorhergehenden Ansprüche.

13. Verfahren zur Herstellung einer Gassackanordnung (2) nach Anspruch 11, das folgende Schritte umfasst:
- Hindurchführen des Vorsprungs (2171) durch die entsprechende Aufnahmeöffnung (2172), während der Vorsprung (2171) in einer Ausgangskonfiguration ist;
- thermisch oder mechanisch Verformen des durch die Aufnahmeöffnung (2172) hindurch ragenden Vorsprungs (2171), so dass der Vorsprung (2171) seine Konfiguration ändert und die Aufnahmeöffnung (2172) hintergreift.

## Claims

1. Airbag arrangement (2) for a motor vehicle (1) having
- an airbag (22) which can be deployed in order to protect a person situated outside or within the motor vehicle (1),
- a housing (21) in which the airbag (22) is arranged prior to the deployment, and
- at least one first fastening means (213) by which a first housing part (211) of the housing (21) is connectable to a second housing part (212) of the housing (21) and/or to a vehicle component, wherein the at least one first fastening means (2113) is arranged in a fastening region (2112) of the first housing part (211),
wherein the fastening region (2112) of the first housing part (211) is connected via a predetermined breaking point (214) to a partial portion (2113) of the first housing part (211), wherein the predetermined breaking point (214) can be broken away by the deploying airbag (22), such that the partial portion (213) of the first housing part (211) detaches from the second housing part (212) or the vehicle component, whereas the fastening region (2112) of the first housing part (211) remains connected by the at least one first fastening means (213) to the second housing part (212) or the vehicle component,
**characterized**
**in that** the predetermined breaking point (214) extends at least in portions around the at least one first fastening means (213) in a state of the at least one first fastening means (213) arranged as intended.

2. Airbag arrangement (2) according to Claim 1, **characterized in that** the predetermined breaking point (214) is provided in the immediate vicinity of the at least one first fastening means (213) in a state of the at least one first fastening means (213) arranged as intended.

3. Airbag arrangement (2) according to Claim 1 or 2, **characterized in that** the predetermined breaking point (214) surrounds the at least one first fastening means (213) in a state of the at least one first fastening means (213) arranged as intended.

4. Airbag arrangement (2) according to Claim 1 or 2, **characterized in that** the first housing part (211) has an outer edge (2115), and **in that** the predetermined breaking point (214) is interrupted by a portion of the outer edge (2115) of the first housing part (211).

5. Airbag arrangement (2) according to any of the preceding claims, **characterized in that** the first housing part (211) has a multiplicity of fastening regions (2112) which are each connected via a predetermined breaking point (214) to the partial portion (2113) of the first housing part (211), wherein the fastening regions (2112) are arranged relative to one another such that, as the predetermined breaking points (214) are broken away, one opening is formed overall, through which the deploying airbag (22) emerges from the housing (22).

6. Airbag arrangement (2) according to any of the preceding claims, **characterized in that** the at least one first fastening means (213) comprises a fastening element for positively locking and/or non-positively locking connection.

7. Airbag arrangement (2) according to any of the preceding claims, **characterized in that** the vehicle component is an engine bonnet (12).

8. Airbag arrangement (2) according to any of the preceding claims, **characterized in that** the second housing part (212) is arranged between the first housing part (211) and the vehicle component in the installed state of the airbag arrangement (2).

9. Airbag arrangement (2) according to any of the preceding claims, **characterized in that** the first housing part (211) and the second housing part (212) are connected to one another by at least one second fastening means (217) which differs from the at least one first fastening means (213).

10. Airbag arrangement (2) according to Claim 9, **characterized in that** the connection provided by the at least one second fastening means (217) is releasable by the deploying airbag (22).

11. Airbag arrangement (2) according to Claim 9 or 10, **characterized in that** the at least one second fastening means (217) has a projection (2171) and a corresponding receiving opening (2172), wherein the projection (2171) projects from the first housing part (211) and the receiving opening (2172) is formed in the second housing part (212), wherein, in the connected state, the projection (2171) projects through the receiving opening (2172) and engages behind the receiving opening (2172).

12. Motor vehicle (1) having an airbag arrangement (2) according to any of the preceding claims.

13. Method for producing an airbag arrangement (2) according to Claim 11, comprising the following steps:
- leading the projection (2171) through the corresponding receiving opening (2172) while the projection (2171) is in an initial configuration;
- thermally or mechanically deforming the projection (2171) projecting through the receiving opening (2172), such that the projection (2171) changes its configuration and engages behind the receiving opening (2172).

## Revendications

1. Agencement de coussin gonflable (2) pour un véhicule automobile (1), comprenant
- un coussin gonflable (22) qui peut être déployé pour protéger une personne se trouvant à l'extérieur ou à l'intérieur du véhicule automobile (1),
- un boîtier (21) dans lequel est disposé le coussin gonflable (22) avant son déploiement, et
- au moins un premier moyen de fixation (213), par le biais duquel une première partie de boîtier (211) du boîtier (21) peut être connectée à une deuxième partie de boîtier (212) du boîtier (21) et/ou à un composant du véhicule, l'au moins un premier moyen de fixation (213) étant disposé dans une région de fixation (2112) de la première partie de boîtier (211),
la région de fixation (2112) de la première partie de boîtier (211) étant connectée par le biais d'une zone destinée à la rupture (214) à une portion partielle (2113) de la première partie de boîtier (211), la zone destinée à la rupture (214) pouvant être déchirée par le coussin gonflable (22) se déployant, de telle sorte que la portion partielle (2113) de la première partie de boîtier (211) se détache de la deuxième partie de boîtier (212), respectivement du composant du véhicule, tandis que la région de fixation (2112) de la première partie de boîtier (211) reste en outre connectée à la deuxième partie de boîtier (212) ou au composant du véhicule par le biais de l'au moins un premier moyen de fixation (213),
**caractérisé en ce que**
la zone destinée à la rupture (214), dans l'état disposé de manière conforme de l'au moins un premier moyen de fixation (213), s'étend au moins en partie autour de l'au moins un premier moyen de fixation (213) .

2. Agencement de coussin gonflable (2) selon la revendication 1, **caractérisé en ce que** la zone destinée à la rupture (214), dans l'état disposé de manière conforme de l'au moins un premier moyen de fixation (213), est prévue à proximité immédiate de l'au moins un premier moyen de fixation (213).

3. Agencement de coussin gonflable (2) selon la revendication 1 ou 2, **caractérisé en ce que** la zone destinée à la rupture (214), dans l'état disposé de manière conforme de l'au moins un premier moyen de fixation (213), entoure l'au moins un premier moyen de fixation (213) sous forme de contour fermé.

4. Agencement de coussin gonflable (2) selon la revendication 1 ou 2, **caractérisé en ce que** la première partie de boîtier (211) présente une arête extérieure (2115) et **en ce que** la zone destinée à la rupture (214) est interrompue par une portion de l'arête extérieure (2115) de la première partie de boîtier (211).

5. Agencement de coussin gonflable (2) selon l'une quelconque des revendications précédentes, **caractérisé en ce que** la première partie de boîtier (211) présente une pluralité de régions de fixation (2112) qui sont connectées à chaque fois par le biais d'une zone destinée à la rupture (214) à la portion partielle (2113) de la première partie de boîtier (211), les régions de fixation (2112) étant disposées les unes par rapport aux autres de telle sorte que lors de la déchirure des zones destinées à la rupture (214), il se forme dans l'ensemble une ouverture à travers laquelle le coussin gonflable (22) se déployant sort du boîtier (22).

6. Agencement de coussin gonflable (2) selon l'une quelconque des revendications précédentes, **caractérisé en ce que** l'au moins un premier moyen de fixation (213) comprend un élément de fixation pour la connexion par engagement par correspondance de formes et/ou par force.

7. Agencement de coussin gonflable (2) selon l'une quelconque des revendications précédentes, **caractérisé en ce que** le composant du véhicule est un capot du moteur (12).

8. Agencement de coussin gonflable (2) selon l'une quelconque des revendications précédentes, **caractérisé en ce que** la deuxième partie de boîtier (212) est disposée, dans l'état monté de l'agencement de coussin gonflable (2), entre la première partie de boîtier (211) et le composant du véhicule.

9. Agencement de coussin gonflable (2) selon l'une quelconque des revendications précédentes, **caractérisé en ce que** la première partie de boîtier (211) et la deuxième partie de boîtier (212) sont connectées l'une à l'autre au moyen d'au moins un deuxième moyen de fixation (217) qui est différent de l'au moins un premier moyen de fixation (213).

10. Agencement de coussin gonflable (2) selon la revendication 9, **caractérisé en ce que** la connexion qui est établie par l'au moins un deuxième moyen de fixation (217) peut être libérée par le coussin gonflable (22) se déployant.

11. Agencement de coussin gonflable (2) selon la revendication 9 ou 10, **caractérisé en ce que** l'au moins un deuxième moyen de fixation (217) présente une saillie (2171) et une ouverture de réception correspondante (2172), la saillie (2171) faisant saillie depuis la première partie de boîtier (211) et l'ouverture de réception (2172) étant réalisée dans la deuxième partie de boîtier (212), la saillie (2171) faisant saillie à travers l'ouverture de réception (2172) dans l'état connecté et venant en prise par l'arrière avec l'ouverture de réception (2172).

12. Véhicule automobile (1) comprenant un agencement de coussin gonflable (2) selon l'une quelconque des revendications précédentes.

13. Procédé de fabrication d'un agencement de coussin gonflable (2) selon la revendication 11, comprenant les étapes suivantes :
- guidage de la saillie (2171) à travers l'ouverture de réception correspondante (2172), tandis que la saillie (2171) est dans une configuration initiale ;
- déformation thermique ou mécanique de la saillie (2171) faisant saillie à travers l'ouverture de réception (2172) de telle sorte que la saillie (2171) modifie sa configuration et vienne en prise par l'arrière avec l'ouverture de réception (2172).
